Europäisches Patentamt

European Patent Office

Office européen des brevets

(19)

(11) Veröffentlichungsnummer: **0 1 1 4 682**
**B1**

# (12) EUROPÄISCHE PATENTSCHRIFT

(45) Veröffentlichungstag der Patentschrift:
**11.06.86**

(21) Anmeldenummer: **84100578.8**

(22) Anmeldetag: **20.01.84**

(51) Int. Cl.⁴: **G 03 B 23/04**, G 03 B 23/14

(54) Diaprojektor und Diamagazin.

(30) Priorität: **24.01.83 DE 3302181**
**24.01.83 DE 3302182**

(43) Veröffentlichungstag der Anmeldung:
**01.08.84 Patentblatt 84/31**

(45) Bekanntmachung des Hinweises auf die Patenterteilung:
**11.06.86 Patentblatt 86/24**

(84) Benannte Vertragsstaaten:
**AT BE CH DE FR GB IT LI NL SE**

(56) Entgegenhaltungen:
**FR - A - 1 551 713**
**FR - A - 2 154 338**
**FR - A - 2 229 989**

(73) Patentinhaber: **Oehmichen, Eckhart,**
**Mannspergerstrasse 96, D-7000 Stuttgart 75 (DE)**

(72) Erfinder: **Oehmichen, Eckhart, Hölzleswiesen 18,**
**D-7000 Stuttgart 75 (DE)**
Erfinder: **Neustadt, Alf, Mohlstrasse 4,**
**D-7000 Stuttgart 1 (DE)**

## Beschreibung

Die Erfindung betrifft einen Diaprojektor für Gefachmagazine und das dazugehörige Gefachmagazin.

Ein derartiger Diaprojektor, der mit einem Rundmagazin arbeitet, ist aus der US-A- 32 76 314 bekannt.

Aus der DE-B- 1051027 ist ein Diaprojektor nach dem Fallschachtprinzip mit einem linearen Diamagazin bekannt. Bei diesem bekannten Diaprojektor werden allerdings die Dias nach dem Projektionsvorgang nicht wieder in das Magazin zurückgebracht, sondern unterhalb des Projektionsortes gestapelt. Das dabei verwendete Magazin unterscheidet sich von dem Rundmagazin dadurch, daß es kein Gefachmagazin ist und daß nicht das Magazin,sondern die Dias im Magazin verschoben werden. Dieser Projektor ist daher kaum mit dem an erster Stelle genannten Projektor vergleichbar, von dem die Erfindung ausgeht.

Es ist die Aufgabe der Erfindung, einen linearen Fallschachtdiaprojektor für Gefachmagazine anzugeben. Weiterhin soll ein dafür geeignetes Gefachmagazin angegeben werden.

Die Realisierung des neuen Fallschachtdiaprojektors ist im Anspruch 1 angegeben; das neue Gefachmagazin im Anspruch 10. Einzelheiten sind in den jeweils abhängigen Ansprüchen angegeben.

Der Diaprojektor hat insbesondere den vorteil, daß er in der Ausführung als Stereoprojektor und Überblendprojektor sehr günstige Abmessungen aufweist.

Die erwünschte Vorwärmung der Dias wird ohne zusätzliche Maßnahmen erreicht. Durch die angegebene Steuerung wird eine sehr einfache und fehlbedienungssichere Bedienung erreicht. Außerdem ist das Aufsetzen eines neuen Magazins schon möglich, während das letzte Dia des vorhergehenden Magazins noch projiziert wird.

Aus den deutschen Gebrauchsmustern 18 27 611 und 18 31 796 ist ein Gefachmagazin mit abschiebbarem Deckel, das Ähnlichkeit mit dem erfindungsgemäßen Magazin aufweist, bekannt, das jedoch bestimmungsgemäß nur in solchen Diaprojektoren verwendet wird, bei denen die Dias mittels eines Schiebers, der durch Schlitze im Magazin durch dieses hindurchbewegt wird, in Projektionsstellung gebracht werden. Dieses Magazin ist daher auch mit aufgeschobenem Deckel nicht vollständig geschlossen, so daß die Dias verstauben können. Außerdem hat das bekannte Magazin keine Verriegelungsvorrichtung zwischen Gehäuse und Boden, die beim Einsetzen in den Projektor selbsttätig entsperrt wird.

Die Erfindung wird nun anhand der Zeichnungen näher erläutert. Es zeigt:

Fig. 1 ein Gefachmagazin für den Projektor in Füllstellung.

Fig. 2 den Projektor mit aufgesetztem Gefachmagazin in Arbeitsstellung.

Fig. 3 die Mitte des Projektors von oben.

Fig. 4 und 5 Einzelheiten der Deckelverriegelung.

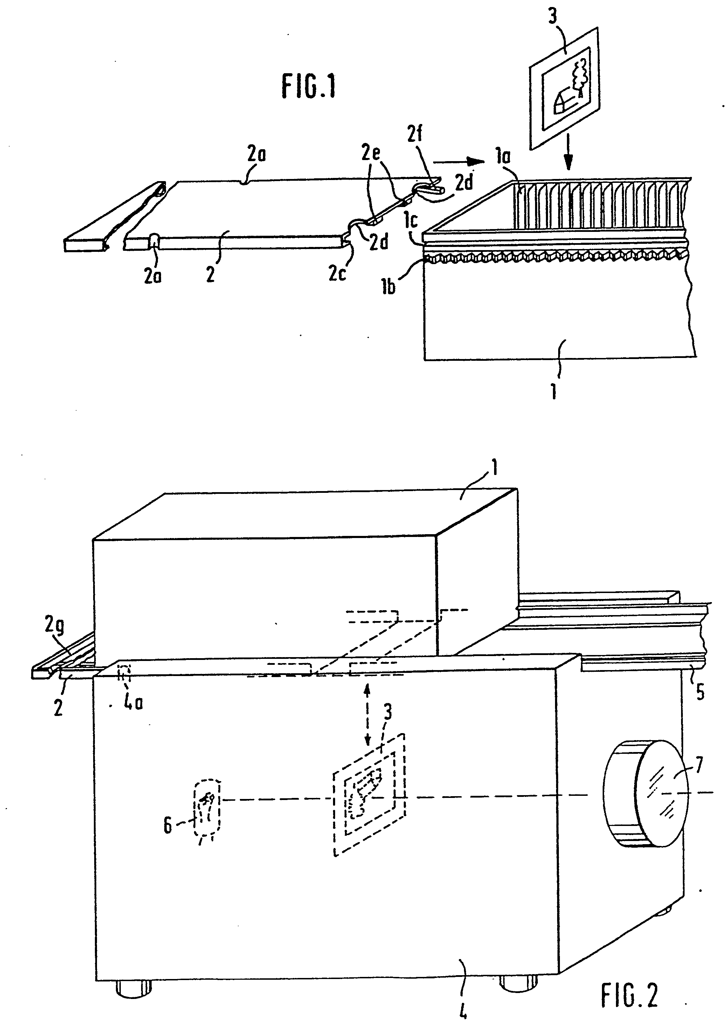

Das für den Projektor bestimmte in Fig.1 gezeigte Gefachmagazin besteht aus einem Magazingehäuse 1 mit einem Deckel 2. Das Magazingehäuse 1 hat in an sich bekannter Weise eine Zahnstange1b, die zum Weitertransport dient. Die Lamellen des Magazingehäuses sind mit 1a bezeichnet.

Das Magazingehäuse ist in Füllstellung gezeichnet, wie durch ein Dia 3 angedeutet ist. Man sieht, daß das Dia aufrechtstehend und seitenrichtig eingesetzt wird. Nach dem Befüllen wird der Deckel 2 in Längsrichtung (Längsführung aus Nut 1c and Steg 2c) aufgeschoben bis eine Rastnase 2f an der nichtgezeigten Magazingehäuseschmalseite einrastet. Die Hinterkante 2g des Deckels ist dabei der Anschlag. Auf diese Weise ist das Magazin vollständig geschlossen und transportsicher verriegelt. Die Rastnase 2f ist mit einer nichtgezeigten Druckfläche zum Entriegeln versehen. Der Deckel 2 hat außerdem vorn abgeschrägte Gleitschienen 2e für die Dias, Rast- und Führungsvertiefungen 2a' und Ausnehmungen 2d.

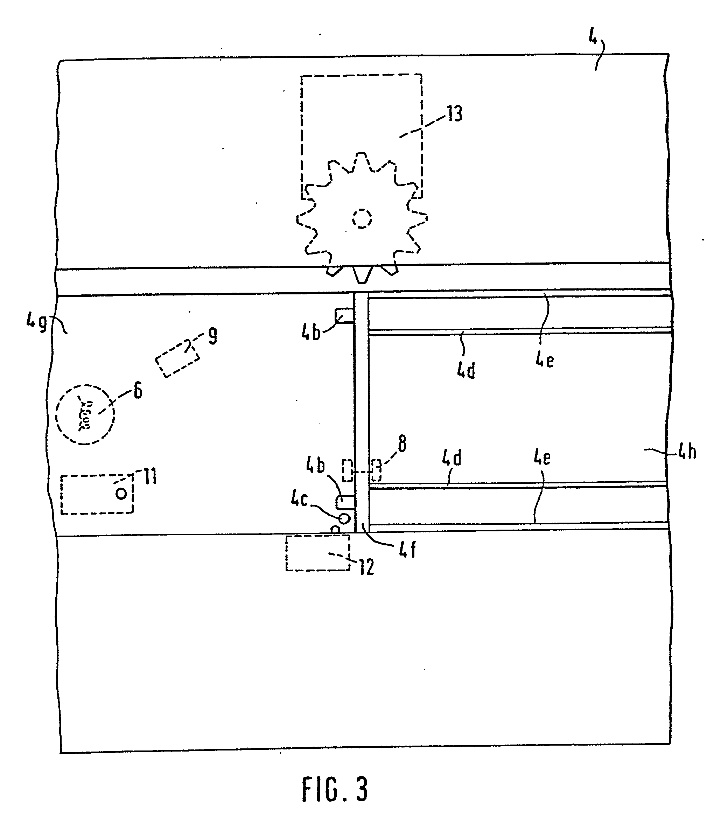

In Fig. 2 ist ein Projektor 4 mit aufgesetztem Magazin 1, 2 gezeigt. Zum Einsetzen wird das Diamagazin um 180 Grad um seine Längsachse gedreht, so daß der Deckel jetzt den Boden des Magazins bildet und die Dias auf den Gleitschienen 2e aufsitzen. Beim Einsetzen in eine Aufnahme 4g (Fig.3) wird der Deckel des Gefachmagazins etwas schräg eingeführt und unter einen Niederhalter 4b geschoben und durch diesen und mittels Rastkugeln 4a, die in die Vertiefungen 2a eingreifen, in seiner Lage fixiert. Die Ausnehmungen 2d erleichtern das Einführen. Gleichzeitig wird mit einem Stift 4c am Projektor 4, der die Rastnase 2f betätigt, das Magazingehäuse 1 entriegelt, so daß es gegenüber dem Boden 2 verschiebbar ist.

Am Projektor 4 in Fig. 2, von dem noch eine Lampe 6 und ein Objektiv 7 angedeutet sind, befindet sich oben ein zweiter Deckel 5, auf den das Magazingehäuse 1 bei seiner Bewegung, die über die Zahnstange 1b erfolgt, hinüberläuft. Ein Antrieb 13 (Fig.3) steuert die Bewegung des Magazingehäuses so, daß am Ende der Vorwärtsbewegung auf Rücklauf geschaltet wird. Am Ende der Rückwärtsbewegung befindet sich das Magazingehäuse 1 wieder über dem Deckel 2. Es kann nun zusammen mit dem Deckel 2 herausgenommen werden. Beim Herausnehmen rastet die Rastnase 2f ein.

Der zweite Deckel 5 ist nicht erforderlich, wenn man, wie in Fig.3 angedeutet, diesen in das Gehäuse 4 des Projektors integriert. Die integrierte Aufnahme ist mit 4h bezeichnet und hat Stege 4e für die Längsführung des Magazingehäuses 1 und Gleitschienen 4d für die Dias.

Zwischen den beiden Deckeln oder zwischen dem eingesetzten Deckel und dem integrierten Deckel, die jeweils fluchtend liegen, befindet sich der Fallschacht 4f.

Für die mechanische Betätigung des Projektors ist ein Antrieb für die Vorwärts- und Rückwärtsbewegung des Magazingehäuses und ein Diaheber für die Vertikalbewegung der Dias vorgesehen. Der Antrieb ist ein Eintourenantrieb, bestehend aus einem Getriebemotor, einer Rutschkupplung, einer elektromagnetisch betätigten Rastklinke und einem nachgeschalteten Getriebe mit Antriebszahnrad. Bei jedem Auslösen des Antriebs wird das Magazingehäuse um ein Fach vor- oder rückwärts weitertransportiert. Die Umschaltung der Drehrichtung erfolgt durch Umpolen des Getriebemotors. Der nichtgezeigte Diaheber besteht aus einem Drehmagnet, an dessen Welle ein Hebel befestigt ist.

In der Aufnahme 4g ist ein Mikroschalter 11 eingebaut. Dieser Schalter gibt den Antrieb in vorwärtsrichtung erst frei, wenn ein Diamagazin ordnungsgemäß eingesetzt ist. Bei der Anordnung nach Fig.2 ist ein zweiter entsprechender Mikroschalter vorgesehen, der den Antrieb sperrt, wenn kein zweiter Deckel ordnungsgemäß eingesetzt ist. Auf diese Weise wird verhindert, daß die Dias aus dem bei 4g eingesetzten Diamagazin zu der Aufnahme für den Deckel 5 hinüberbewegt werden. Die Anordnung dieser Schalter bringt den Vorteil, daß mit dem Diaprojektor Einzelbildprojektion möglich ist, ohne daß sich der Antrieb dabei einschaltet.

Gegenüber dem Antriebszahnrad befindet sich eine Reflexlichtschranke 12, die den Antrieb in Vorwärtsrichtung auslöst, wenn man das Magazingehäuse nach dem Einsetzen des Diamagazins etwas nach vorn schiebt, so daß das Dia von Platz 1 des Diamagazins in die Projektionsstellung fällt, ohne daß die Fortschalttaste betätigt werden muß.

Die Reflexlichtschranke 12 dient nicht nur dazu festzustellen ob sich das Magazingehäuse in der Anfangstellung befindet, sondern auch dazu, ob dieses vollständig durchgelaufen ist. Wenn nämlich von der Reflexlichtschranke kein Signal mehr abgegeben wird und gleichzeitig der Antrieb in Vorwärtsrichtung erfolgt, dann stoppt der Antrieb, kehrt seine Bewegungsrichtung um und fährt das Magazingehäuse in die Anfangsstellung zurück. Hierbei ist der Diaheber dauernd in Arbeitsstellung. Der Antrieb in Rückwärtsrichtung wird abgeschaltet, wenn das vordere Ende des Magazingehäuses die Reflexlichtschranke vollständig passiert hat. Ist das Diamagazingehäuse pro Fach mit einem Strichcode versehen, so kann die Reflexlichtschranke vorteilhaft dazu verwendet werden, diesen Strichcode zu lesen.

Besonders vorteilhaft ist es, im Fallschacht 4f eine Infrarotlichtschranke 8 anzuordnen, mit der festgestellt wird, ob ein Dia gefallen ist. Durch Negativmeldung dieses Detektors wird bewirkt, daß der Antrieb schrittweise solange weitergeschaltet wird, bis nach dem Vorschieben des Magazingehäuses selbsttätig das erste vorhandene Dia in Projektionsstellung gebracht wird. Hierdurch werden nichtbestückte Diafächer gewissermaßen übersprungen.

Anstelle einer mechanischen Blende ist der Diaprojektor mit einer Dunkelsteuerung für die Projektionslampe versehen, die die Projektionslampe erst einschaltet, wenn ein Dia fällt. Bei der Betätigung des Fortschaltknopfes nach der Projektion wird zuerst die Lampe abgeschaltet und der Antrieb zum Diawechsel dann freigegeben, wenn die Helligkeit auf einen vorgegebenen Wert abgesunken ist, der mittels eines Fototransistors 9 festgestellt wird.

Um die Ab- und Aufblendung variieren zu können ist die Helligkeitssteuergeschwindigkeit mit Hilfe eines einstellbaren Zeitgliedes einstellbar. Das Stellglied hierfür befindet sich vorteilhaft in der Fernbedienung. Die ideale Steuerung ist gegeben, wenn der Betrachter ein lineares Ansteigen der Helligkeit wahrnimmt. Eine Annäherung an diese Idealkennlinie kann auf einfache Weise dadurch erreicht werden, daß man die Lampe nicht vom Spannungswert 0 aus hochsteuert, sondern die Hochsteuerung bei einem vorgegebenen Spannungswert dann beginnt, wenn das Dia fällt und den Lichtstrahl der Lichtschranke 8 unterbricht.

Um eine Beschädigung der Dias und des Antriebs zu verhindern, ist eine weitere Zeitschaltung vorgesehen, die den Antrieb abschaltet, wenn nach einer Zeit von z.B. 1 sec die nächste Raststellung des Magazingehäuses nicht erreicht ist.

Der Projektor wurde für Monoprojektion beschrieben. Wegen der hohen Genauigkeit des Transports und der Steuerung ist der Projektor in der Ausführung als Stereoprojektor besonders vorteilhaft verwendbar.

Der Deckel des Magazins wird vorteilhaft so ausgebildet, daß er nicht falsch aufgeschoben werden kann, beispielsweise durch verschiedene Längsführungen auf beiden Seiten.

Bei der Verwendung des Magazins für überblendprojektoren wird das Gehäuse mit einer Längszwischenwand versehen und der Projektor entsprechend geändert (zweiter Diaheber, Zwischenwand im Schacht und geänderte Ablaufsteuerung).

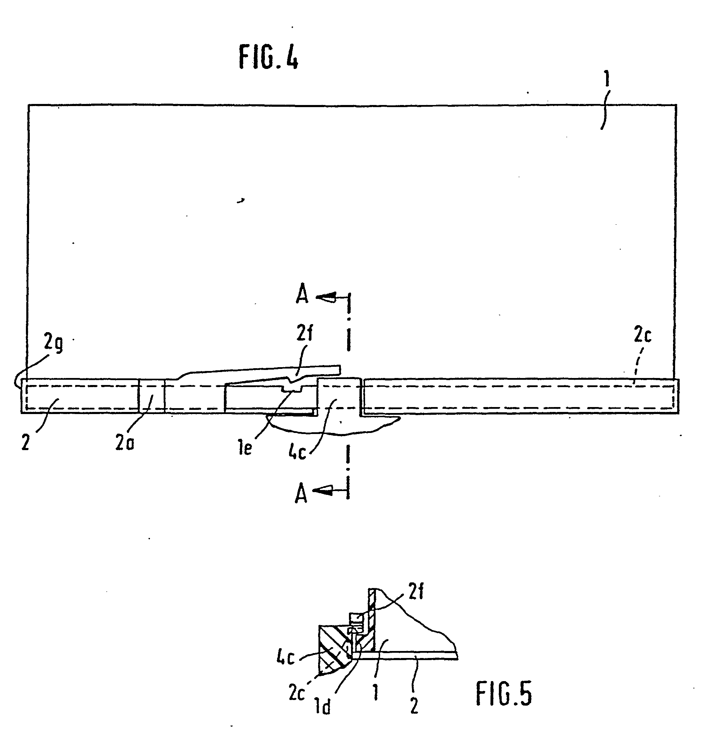

In Fig. 4 und 5 sind Einzelheiten einer Verriegelung zwischen Deckel 2 und Gehäuse 1, sowie des damit zusammenwirkenden Teils 4c am Projektor dargestellt. Die Verriegelung und die Anordnung der Teile weicht dabei etwas von der im Zusammenhang mit den in Fig.1 bis 3 beschriebenen ab.

Fig. 4 ist eine Rückansicht auf das Magazin in eingesetztem Zustand gemäß Fig.2, jedoch unmittelbar nach dem Aufsetzen, d.h. das manuelle Vorschieben des Gehäuses zum Einleiten des Projektionsvorgangs ist noch nicht erfolgt. Fig.5 ist ein Schnitt längs der Linie A-A in Fig.4. Das Gehäuse hat zur Längsführung des Deckels keine Nut lc, sondern ein Rechteckprofil ld. Der Steg 2c und die Seitenfläche des Deckels sind etwa in der Mitte unterbrochen und an der entsprechenden Stelle das Rechteckprofil des Gehäuses. Im Bereich der Unterbrechung befindet sich an einem federnden Arm die Rastnase 2f. Man sieht, daß durch ein am Projektor angebrachtes Profilstück 4c der Arm hochgedrückt wird, so daß die Rastnase 2f nicht mehr mit einer Vertiefung le im Rechteckprofil ld des Gehäuses im Eingriff steht. Im nichteingesetzten Zustand ist die Rastnase im Eingriff, so daß der Deckel 2 gesichert ist. Die Öffnung für das Profilstück 4c ist so groß, daß das Ende des Arms auch durch einen Finger hochgedrückt werden kann.

Aus der Schnittzeichnung, Fig. 5, ist erkennbar, daß das Profilstück 4c so geformt ist, daß die Nase über das Rechteckprofil 1d des Gehäuses greift. Hiermit ist sichergestellt, daß das Herausnehmen des Magazins nur in der Endstellung möglich ist. Für die Längsführung auf der anderen Seite des Diamagazins kann ein gleiches Profilstück 4c vorgesehen werden. Das Magazingehäuse und der Magazindekkel müssen dann ebenfalls unterbrochen werden. Eine zweite Verriegelung ist nicht erforderlich.

**Patentansprüche**

1. Diaprojektor für Gefachmagazine, der nach dem Fallschachtprinzip arbeitet, dadurch gekennzeichnet, daß an seiner Oberseite eine erste Aufnahme (4g) für den Deckel (2) eines linearen Fallschachtmagazins (1, 2) mit einem Niederhalter (4b), einer Rastvorrichtung (4a) und einem Teil (4c) einer Wirkverbindung zur Entriegelung des Magazingehäuses beim Einsetzen des Magazins vorgesehen ist, daß sich am einen Ende der ersten Aufnahme (4g) der Fallschacht (4f) und hinter dem Fallschacht in Verlängerung des Magazindeckels (2) ein im Projektorgehäuse integrierter Deckel (4h) oder eine zweite Aufnahme für einen Deckel (5) befindet, und daß in den Aufnahmen jeweils ein Schaltmittel (11) vorgesehen ist, das den Antrieb (13) für das Magazingehäuse (1) nur freigibt, wenn beide Deckel eingerastet sind.

2. Diaprojektor nach Anspruch 1, dadurch gekennzeichnet, daß zum Antrieb eine Eintourenkupplung mit nachgeschaltetem Getriebe verwendet ist.

3. Diaprojektor nach Anspruch 1 oder Anspruch 2, dadurch gekennzeichnet, daß der Antrieb über ein Schaltmittel (12) so gesteuert wird, daß er nach dem Vorschieben des Magazingehäuses (1) in eine vorgegebene Anfangsstellung das Dia im ersten Fach selbsttätig in Projektionsstelung bringt.

4. Diaprojektor nach Anspruch 3, dadurch gekennzeichnet, daß der Antrieb (13) über ein zusätzliches Schaltmittel (8) im Fallschacht so gesteuert wird, daß das erste vorhandene Dia selbsttätig und bei einmaliger Betätigung der Weiterschaltung das jeweils nächste vorhandene Dia in Projektionsstellung gelangt.

5. Diaprojektor nach Anspruch 3 oder 4, dadurch gekennzeichnet, daß das Magazingehäuse (1) nach Erreichen seiner Endstellung selbsttätig in die Anfangsstellung zurückgebracht wird.

6. Diaprojektor nach einem der vorhergehenden Ansprüche, dadurch gekennzeichnet, daß bei Betätigung der Weiterschaltung zuerst eine Dunkelsteuerung der Lampe (6) und anschließend bei Erreichen eines mittels eines Fotodetektors (9) festgestellten vorgegebenen Helligkeitswertes der Antrieb (13) ausgelöst wird und daß die Lampe beim Fallen des nächsten Dias wieder hellgesteuert wird.

7. Diaprojektor nach Anspruch 6, dadurch gekennzeichnet, daß die Helligkeitssteuergeschwindigkeit einstellbar ist.

8. Diaprojektor nach Anspruch 7, dadurch gekennzeichnet, daß die Helligkeitssteuerung nach dem Herabfallen des Dias bei einem vorgegebenen Spannungswert beginnt.

9. Diaprojektor nach einem der vorhergehenden Ansprüche, dadurch gekennzeichnet, daß der Antrieb (13) selbsttätig abschaltet, wenn innerhalb einer vorgegebenen Zeit die nächste Raststellung des Magazingehäuses (1) nicht erreicht ist.

10. Gefachmagazin für einen Fallschachtprojektor nach einem der Ansprüche 1 bis 9, dadurch gekennzeichnet, daß es aus einem quaderförmigen Gehäuse mit Zahnschiene und einem abnehmbaren Deckel besteht, daß das Gehäuse (1) nur auf einer Seite offen ist, die sich in der Füllage oben und in der Arbeitslage unten befindet, daß das Gehäuse (1) an der offenen Seite eine Längsführungen (1c) für den dazu passend (2c) ausgebildeten Deckel (2) aufweist, daß eine Rastvorrichtung (2f) zum Fixieren des Deckels in der vollständig aufgeschobenen Stellung vorgesehen ist und daß der Deckel mit einem Teil (2a) einer Wirkverbindung zum Einrasten des Magazins in der Projektionsvorrichtung sowie mit Laufschienen (2e) für die Diapositive versehen ist.

11. Gefachmagazin nach Anspruch 10, dadurch gekennzeichnet, daß die Längsführungen (1c, 2c) auf beiden Seiten unterschiedlich sind.

12. Gefachmagazin nach Anspruch 10 oder 11, dadurch gekennzeichnet, daß der Deckel (2) an einer Seite mindestens eine Ausnehmung (2d) aufweist.

13. Gefachmagazin nach einem der Ansprüche 10 bis 12, dadurch gekennzeichnet, daß der Deckel (2) auf der der Rastvorrichtung entgegengesetzten Schmalseite einen Anschlag (2g) aufweist.

**Claims**

1. Slide projector for slide trays divided into compartments which works on the gravity feed principle, characterized in that its top is provided with a first receptacle (4g) for the cover (2) of a linear slide tray (1, 2) having a toe dog (4b), a locking means (4a), and a part (4c) of an operative connection for unlatching the housing of the tray during insertion of the tray, that at one end of the first receptacle (4g) there are provided the vertical passageway (4f) and, behind the passageway and in alignment with the cover (2) of the tray, either a cover (4a) integral with the housing of the projector or a second receptacle for a cover (5), and that each of the receptacles contains a switching means which releases the drive (13) for the housing (1) of the tray only if both covers have locked into position.

2. A slide projector as claimed in claim 1, characterized in that the drive is a single-revolution drive followed by a gearing.

3. A slide projector as claimed in claim 1 or claim 2, characterized in that the drive is so controlled via a switching means (12) as to automatically bring the slide in the first compartment to the projecting position after the housing (1) of the tray has been pushed forward to a predetermined initial position.

4. A slide projector as claimed in claim 3, characterized in that the drive (13) is so controlled via an additional switching means (8) in the vertical passageway that the first slide is brought to the projecting position automatically, and that the respective next slide is brought to the projecting position by a single depression of the forward control push button.

5. A slide projector as claimed in claim 3 or 4, characterized in that, after reaching its end position, the housing (1) of the slide tray is automatically returned to the initial position.

6. A slide projector as claimed in any one of the preceding claims, characterized in that depression of the forward control push button first actuates a dark control of the lamp (6) and then, when a predetermined brightness value sensed by a photodetector (9) is reached, releases the drive (13), and that the intensity of the lamp is increased again as the next slide is dropping.

7. A slide projector as claimed in claim 6, characterized in that the brightness control rate is adjustable.

8. A slide projector as claimed in claim 7, characterized in that the brightness control starts at a predetermined voltage value after the slide has dropped.

9. A slide projector as claimed in any one of the preceding claims, characterized in that the drive (13) turns off automatically if the next projecting position has not been reached within a predetermined time.

10. Slide tray divided into compartments for a projector as claimed in any one of claims 1 to 9, characterized in that it consists of a rectangular-parallelepiped-shaped housing with teeth and a removable cover, that the housing (1) is open on only one side which is at the top in the loading position and at the bottom in the working position, that near the open side, the housing has a longitudinal guide (Ic) for the cover (2), which is adapted to fit (2c) the longitudinal guide (Ic), that there is provided a detent (2f) for locking the cover in the completely slipped-on position, and that the cover is provided with a part (2a) of an operative connection for locking the tray in position and with slide rails for the slides.

11. A straight slide tray as claimed in claim 10, characterized in that different longitudinal guides (1c, 2c) are provided on two sides.

12. A straight slide tray as claimed in claim 10 or 11, characterized in that the cover has a recess (2d) at at least one side.

13. A straight slide tray as claimed in any one of claims 10 to 12, characterized in that the cover (2) has a stop (2g) at the short side opposite the detent.

## Revendications

1. Projecteur de diapositives pour magasin de diapositives divisé en compartiments, qui fonctionne avec une alimentation par gravité, caractérisé en ce que son sommet est pourvu d'un premier réceptacle (4g), pour le couvercle (2) d'un magasin de diapositives linéaire (1,2) comportant un ergot (4b), un moyen de verrouillage (4a) et une pièce (4c) d'une connexion servant à déverrouiller le boîtier du magasin lors de l'insertion du magasin, en ce qu'à une extrémité du premier réceptacle (4g) est prévu le passage verticale (4f) et, derrière ce passage vertical et en alignement avec le couvercle (2) du magasin, soit un couvercle (4a) en une seule pièce avec le boîtier du projecteur, ou un second receptacle pour un couvercle (5) et en ce que chacun des réceptacles contient un moyen de commutation qui libère l'entraînement (13) du boîtier (1) du magasin seulement si les deux couvercles sont verrouillés en position.

2. Projecteur de diapositives selon la revendication 1, caractérisé en ce que l'entraînement est un entrainement à un tour suivi d'un engrenage.

3. Projecteur de diapositives selon la revendication 1 ou 2, caractérisé en ce que l'entraînement est commandé par un moyen de commutation(12) de manière à amener automatiquement la diapositive du premier compartiment dans la position de projection, après que le boîtier (1) ait été poussé en avant dans une position initiale prédéterminée.

4. Projecteur de diapositive selon la revendication 3, caractérisé en ce que l'entraînement (13) est commandé par l'intermédiaire d'un moyen de commutation additionnel (8) dans le passage vertical, de manière que la première diapositive soit amenée en position de projection automatiquement et que la diapositive suivante respective soit amenée en position de projection par un simple enfoncement du bouton de commande d'avance.

5. Projecteur de diapositive selon la revendication 3 ou 4, caractérisé en ce que, après avoir atteint sa position finale, le boîtier (1) du magasin de diapositives est automatiquement renvoyé dans sa position initiale.

6. Projecteur de diapositives selon l'une quelconque des revendications précédentes caractérisé en ce que l'enfoncement du bouton de commande d'avance actionne d'abord une commande d'extinction de la lampe (6), puis, lorsqu'une valeur de brillance prédéterminée évaluée par un photodétecteur (9) est atteinte, il libère l'entraînement, et en ce que l'intensité de la lampe est ensuite réaugmentée lorsque la diapositive suivante tombe.

7. Projecteur de diapositives selon la revendication 6 caractérisé en ce que le taux de commande de brillance est réglable.

8. Projecteur de diapositives selon la revendication 7 caractérisé en ce que la commande de brillance commence à une valeur de tension prédéterminée, après que la diapositive soit tombée.

9. Projecteur de diapositives selon l'une quelconque des revendications précédentes caractérisé en ce que l'entraînement (13) est automatiquement interrompu si la position de projection suivante n'a pas été atteinte dans une durée prédéterminée.

10. Magasin de diapositives divisé en compartiments pour un projecteur selon l'une quelconque des revendications 1 à 9 caractérisé en ce qu'il consiste en un boîtier en forme de parallélépipède rectangle pourvu de dents et d'un couvercle amovible, en ce que ce boîtier (1) est ouvert sur un seul de ses côtés, qui est le dessus dans la position de chargement et le dessous en position de travail, en ce que, pres du côté ouvert, le boîtier comprend un guide longitudinal (1c) pour le couvercle (2), lequel est adapté pour s'ajuster (2c) au guide longitudinal (1c), en ce qu'il est prévu un cliquet (2f) pour verrouiller le couvercle en position complètement glissée en avant et en ce que le couvercle est pourvu d'une partie (2a) pour une connexion fonctionnelle verrouillant le magasin en position et de rails de glissement pour les diapositives.

11. Magasin de diapositives droit selon la revendication 10 caractérisé en ce que des guides longitudinaux différents (1c, 2c) sont prévus sur ses deux côtés.

12. Magasin de diapositives droit selon la revendication 10 ou 11 caractérisé en ce que le couvercle possède une indentation (2d) au moins d'un côte.

13. Magasin de diapositives droit selon l'une quelconque des revendications 10 à 12 caractérisé en ce que le couvercle (2) possèdeune butée (2g) sur le petit côté opposé au cliquet.

FIG.1

FIG.2

FIG. 3

# FIG.4

# FIG.5